# FASCICULE DE BREVET EUROPEEN

(11) **EP 2 756 483 B1**
(45) Date de publication et mention de la délivrance du brevet: **16.08.2023**
(21) Numéro de dépôt: 12766317.7
(22) Date de dépôt: 29.08.2012
(51) Int. Cl.: G06T 7/20

(54) **PROCÉDÉ ET SYSTÈME D'ACQUISITION ET DE TRAITEMENT D'IMAGES POUR LA DÉTECTION DU MOUVEMENT**
VERFAHREN UND SYSTEM ZUR ERFASSUNG UND VERARBEITUNG VON BILDERN ZUR BEWEGUNGSDETEKTION
METHOD AND SYSTEM FOR ACQUIRING AND PROCESSING IMAGES FOR THE DETECTION OF MOTION

(30) Priorité: 16.09.2011 FR 1158248
(43) Date de publication de la demande: 23.07.2014
(73) Titulaire: Prynel, 21190 Corpeau (FR)
(72) Inventeur: BROSSAIS, Jérôme, F-21190 Merceuil (FR); BIDAULT, Stéphane, F-21200 Beaune (FR)
(74) Mandataire: Germain Maureau
(86) Numéro de dépôt international: PCT/FR2012/051950
(87) Numéro de publication internationale: WO 2013/038089

(56) Documents cités:
- WO-A1-99/06940
- WO-A2-03/073359
- US-B1- 6 661 918
- US-B1- 6 771 818
- Anonymous: "Camera temps de vol - Wikipédia", , 11 March 2016 (2016-03-11), pages 1-4, XP055257595, Retrieved from the Internet: URL:https://fr.wikipedia.org/w/index.php?t itle=Camera_temps_de_vol&printable=yes [retrieved on 2016-03-11]

## Description

La présente invention se rapporte à un procédé d'acquisition et de traitement d'images pour la détection du mouvement d'au moins une cible dans une scène.

Elle se rapporte plus particulièrement à un procédé utilisant en particulier une caméra pour l'acquisition des images devant être analysées et traitées.

L'objet de l'invention se situe dans le domaine de l'acquisition, de l'analyse et du traitement d'images en vue de la détection et de l'étude de mouvements, ceci en « temps réel », pour diverses applications, comme par exemple et à titre non limitatif les applications de télésurveillance ou de vidéo protection, les applications médicales pour des patients effectuant des exercices articulaires et/ou musculaires, les applications industrielles pour le contrôle automatique de la production de pièces, et les applications de sécurité pour la détection de personnes s'approchant d'un périmètre de sécurité, tel qu'une zone protégée ou présentant un danger.

Les systèmes actuels d'acquisition d'images par caméra et de traitement de ces images permettent de détecter des personnes, éventuellement de reconnaître des visages, ou plus simplement de détecter une présence, une position, un mouvement ou une accélération pour des personnes ou des objets.

Le traitement d'images, pour de telles finalités, est basé sur divers algorithmes ou méthodes connus, tels que : détection de mouvement par différence d'image, reconnaissance de forme par classificateur de Haar, reconnaissance de texture par méthode statistique, etc.

L'analyse et le traitement d'images, effectués par ces méthodes ou d'autres, sont appliqués notamment dans le domaine de la surveillance et de la sécurité, en particulier la sécurité anti-intrusion dans des locaux et autres zones devant être protégées contre les intrusions de personnes extérieures, et également dans le domaine de l'anti-collision pour éviter les collisions.

Dans le domaine de la détection de mouvements, les algorithmes et méthodes actuellement connus et utilisés sont en particulier les sept méthodes suivantes.

Une première méthode connue, dite méthode par différence d'image, consiste à effectuer une simple soustraction de deux images, prises à des instants successifs, et toute différence entre les deux images, dépassant un certain seuil, indique un mouvement dans la zone surveillée. Cette première méthode a pour avantage d'être très rapide et de ne mobiliser que très peu de ressources. Elle comporte cependant divers inconvénients : quelques paramètres importants sont à fixer, seule une partie du mouvement est détectée, la précision est faible et la méthode est sensible à la variation de la luminosité ambiante.

Une deuxième méthode connue, dit méthode du flot optique, consiste à mettre en oeuvre un champ de déplacement visuel qui permet d'expliquer des variations dans une image animée, en termes de déplacement de points dans une image. Cette deuxième méthode a pour avantage de fournir une information complète (en amplitude et direction) sur le mouvement de chaque point caractéristique de l'image. Elle conserve toutefois divers inconvénients : nécessité d'un traitement informatique lourd, fonctionnement satisfaisant seulement pour des mouvements assez amples d'objets assez gros dans l'image, sensibilité à la variation de la luminosité ambiante. Cette deuxième méthode n'est actuellement utilisée que par quelques systèmes de prévention d'intrusion, et avec un matériel très spécifique.

Une troisième méthode connue, dite méthode de soustraction de fond simple, consiste à effectuer, à partir d'une image de fond de référence créée comme moyenne ou médiane des N premières images, une différence entre chaque image courante et le fond de référence. On obtient ainsi une image d'intensité de mouvement à comparer à un seuil. Cette troisième méthode a pour avantages d'être rapide et de ne mobiliser que peu de ressources. Elle conserve néanmoins de nombreux inconvénients énumérés comme suit :
- divers paramètres importants doivent être fixés ;
- une personne immobile peut se trouver intégrée dans le fond de référence ;
- cette méthode est sensible aux changements de luminosité rapides ;
- cette méthode est aussi sensible aux mouvements des éléments extérieurs, par exemple une branche d'arbre qui bouge dans le vent ;
- une personne apparaissant noire sur un fond noir n'est pas détectée ;
- il est préférable que la scène initiale soit vierge, lors de la création du fond de référence, ce qui ne peut pas toujours être obtenu ; et
- les ombres, même d'objets fixes, sont détectées comme du mouvement (si elles ne sont pas incluses dans le fond de référence).

Une quatrième méthode connue, dite méthode de mixture de gaussiennes, s'apparente à la méthode de soustraction de fond avec cependant une phase initiale qui consiste en la modélisation d'un fond de synthèse, en utilisant N gaussiennes pour chaque pixel. L'analyse de l'image courante en fonction du fond donne directement les pixels ayant eu du mouvement. Les avantages d'une telle quatrième méthode sont une meilleure modélisation du fond, l'inutilité d'un seuil et la réalisation d'une analyse en temps réel. Les inconvénients restent cependant nombreux et correspondent à certains inconvénients de la méthode précédente, à savoir :
- les traitements à réaliser sont plus lourds ;
- les images de mouvement sont assez bruitées ;
- une personne noire sur un fond noir n'est pas détectée ;
- il est préférable que la scène soit vierge lors de la création du fond ; et
- cette méthode est sensible aux changements de luminosité rapides.

Une cinquième méthode connue, dite méthode « CodeBook », consiste en une variante de cette quatrième méthode, à la différence que chaque pixel du fond est modélisé par un « cône » de couleur lors de la phase d'initialisation, puis une comparaison est faite entre la modélisation du fond et l'image courante. Les avantages suivants sont ainsi obtenus :
- cette méthode est assez rapide, en particulier plus rapide que la mixture de gaussiennes, même si elle peut être moins rapide que la soustraction de fond simple ;
- il peut y avoir du mouvement lors de la création du fond ;
- l'analyse des images s'effectue en temps réel ;
- en théorie, les ombres n'ont pas d'influence ; et
- la méthode est aussi moins sensible aux changements de luminosité.

Cependant, cette cinquième méthode conserve une partie des inconvénients des méthodes précédentes, à savoir :
- divers paramètres importants sont à fixer ;
- une personne noire sur un fond noir n'est pas détectée ; et
- la méthode reste sensible aux changements de luminosité rapides.

Une sixième méthode connue, dite méthode de segmentation basée sur l'aspect, est utilisée pour détecter des objets définis, tels que des personnes et des véhicules. Une base de données doit être établie au préalable, afin de permettre un « apprentissage » des objets à détecter. Le classifieur de Haar est un exemple de ce type de méthode, dont les avantages sont de permettre la discrimination et la détection d'objets spécifiques, et ne pas présenter de problèmes dus aux ombres. Toutefois, une telle sixième méthode nécessite une grosse base de données, avec le besoin de créer une cascade par type d'objet, les traitements à exécuter sont lourds et la fiabilité de la méthode est très dépendante de la phase d'apprentissage.

Une septième méthode connue, dite méthode de segmentation basée sur la distance, utilise un principe de stéréovision, avec deux caméras qui, après une phase de calibration, permettent d'obtenir en plus des images une information sur la profondeur de chaque pixel (images ainsi dites « de profondeur »). En effectuant ensuite une soustraction de fond, c'est-à-dire en déterminant la différence entre une image de profondeur de référence et l'image de profondeur obtenue, les personnes ou objets en mouvement sont détectés. La méthode ne rencontre pas de problème dû aux ombres, et seuls les objets extérieurs à la scène sont détectés. Cependant, la mise en oeuvre de cette septième méthode nécessite la réalisation de calculs très lourds, et la phase de calibration est elle aussi très importantes.

Dans l'ensemble, toutes les méthodes actuelles, précédemment considérées, ne sont pas assez fiables, car elles sont sensibles aux variations de luminosité, et elles ne fournissent pas une information précise de profondeur : par exemple, si deux personnes sont « collées » ou « masquées » l'une par l'autre, dans le champ de vision de la caméra, il n'est pas possible de définir laquelle se trouve devant l'autre. De plus, l'environnement tel que les ombres et les mouvements des arbres créent de fausses détections et donc des alarmes intempestives.

L'état de la technique peut aussi être illustré par l'enseignement des documents WO 03/073359 A2, WO 99/06940 A1, US 6,661,918 B1 et US 6,771,818 B1, qui divulguent des procédés et des systèmes de reconnaissance de cibles (objets, personnes) avec divers niveaux de reconnaissance, en mettant en oeuvre une combinaison de capteurs et d'algorithmes.

L'état de la technique peut également être illustré par l'enseignement des demandes WO 2007/105205 A2, WO 2007/096893 A2, WO 2007/132451 A2, WO 2008/120217 A2, WO 2010/103482 A2, et WO 2011/013079 A1. Ces demandes internationales divulguent en effet un système qui permet l'acquisition d'une cartographie de profondeur d'une scène par la mise en oeuvre des sous-étapes suivantes :
- émission d'un faisceau de lumière infrarouge qui illumine la scène, ce faisceau de lumière étant établi selon un maillage prédéfini ;
- détection par un capteur infrarouge de la lumière infrarouge réfléchie par la scène ; et
- traitement des données issues du capteur infrarouge et conversion de ces données en une cartographie de profondeur composé d'une multiplicité de pixels, où chaque pixel intègre des données de profondeur de champ.

Ce système comprend également une caméra conventionnelle en couleur qui effectue l'acquisition d'images en couleur de la scène, en complément de la cartographie de profondeur. Un système sur puce (« SoC » pour « System on Chip ») dédié traduit les données issues du capteur infrarouge en une cartographie de profondeur (autrement appelée carte en relief) qui est soit enregistrée soit adaptée pixel par pixel à l'image obtenue avec la caméra conventionnelle. Le résultat de cette adaptation est ainsi une image où chaque pixel intègre des données de profondeur de champ en plus de la couleur.

La présente invention vise à éviter les inconvénients des méthodes actuelles, tout en conservant les avantages de certaines parmi ces méthodes, et elle a donc pour but de rendre la détection de mouvements plus fiable, en conservant des traitements d'images relativement simples et rapides permettant une analyse en temps réel avec utilisation d'un matériel standard.

A cet effet, l'invention a essentiellement pour objet un procédé d'acquisition et de traitement d'images conforme à la revendication 1

Au sens de la présente invention, il est entendu par « donnée de couleur » une donnée relative à la couleur de l'image qui peut soit être nuancée dans une palette de couleurs en codant un triplet de couleurs rouge, vert et bleu, soit être nuancée dans une palette de gris dans une palette de gris allant du noir au blanc, soit être monochrome noir et blanc. Ainsi, les images primaires de la scène sont des images soit en couleur, soit en nuance de gris, soit monochrome noir et blanc.

Le procédé selon l'invention se propose ainsi d'employer en partie la technologie décrite dans les demandes WO 2007/105205 A2, WO 2007/096893 A2, WO 2007/132451 A2, WO 2008/120217 A2, WO 2010/103482 A2, et WO 2011/013079 A1, et de la compléter avec un traitement des cartographies primaires de profondeur et des images primaires provenant de la caméra pour obtenir les images secondaires.

En soustrayant le fond sur les cartographies primaires de profondeur, l'invention permet de s'affranchir des ombres et/ou des autres parties de l'image qui bougent (eg. éclairage intermittent) sur les éléments fixes de la scène, tels que les murs et/ou sols présents dans la scène. En effet, une ombre ou un mouvement sur un élément fixe demeure à la même profondeur de champ que ledit élément fixe, de sorte que la cartographie primaire ne verra pas cette ombre ou ce mouvement.

Ainsi, les images secondaires correspondent à des images (en couleur, en nuance de gris, ou monochrome noir et blanc) montrant essentiellement la ou les cibles (objets et/ou personnes) de la scène qui apparaissent seules sans le fond, avec une connaissance du relief de ces cibles issue des données de profondeur de champ. L'invention permet ainsi de conserver la texture des cibles, sans les ombres ou mouvement qui bougent sur les éléments fixes de la scène.

Un avantage de l'invention est de permettre, grâce à l'acquisition des cartographies primaires de profondeur, de s'affranchir des deux principales contraintes classiquement observées avec les algorithmes classiques d'analyse de mouvement, à savoir la variation de la luminosité ambiante et le manque d'information sur la perspective de la scène.

En effet, l'invention permet de s'affranchir des variations de lumière car les déterminations des cartographies primaires et secondaires sont indépendantes des changements de luminosité dans la scène ; les relevés infrarouge s'effectuant à partir d'une source de lumière infrarouge indépendante de la lumière externe.

L'invention n'est bien entendu pas limitée à la méthode de soustraction du fond de référence employée, qui peut à titre d'exemple non limitatif est du type méthode de soustraction de fond simple.

Au final, l'invention permet d'obtenir un taux d'efficacité minimum de 99% sur des fonctions d'analyse d'image complexes comme l'unicité de présence dans des espaces confinés, ou l'analyse de mouvement pour des applications médicales.

Un autre avantage de l'invention est d'effectuer les traitements des cartographies et images en deux dimensions, que ce soit lors de l'étape de détermination des cartographies secondaires ou lors de l'étape de superposition des cartographies secondaires et des images primaires, ce qui permet de bénéficier de tous les avantages suivants :
- une compatibilité du procédé selon l'invention avec tous les traitements d'images en deux dimensions qui constituent les traitements les plus nombreux ;
- une taille de calcul ou charge processeur qui demeure faible, comparativement à d'autres traitements d'image comme les traitements stéréoscopiques, ce qui permet avantageusement d'utiliser des processeurs standards.

Selon une caractéristique de l'invention, l'étape de détermination des cartographies secondaires comporte une sous-étape d'attribution de l'un des deux états suivants à chacun des pixels :
- un premier état pour les pixels dits de fond correspondants aux pixels supprimés sur les cartographies primaires par l'algorithme de soustraction de fond ; et
- un second état pour les pixels dits de cible correspondants aux pixels non supprimés sur les cartographies primaires par l'algorithme de soustraction de fond, lesdits pixels de cible intégrant les données correspondantes de profondeur de champ.

Ainsi, la cartographie secondaire constitue une cartographie binarisée ou binaires, avec des pixels de fond dans un premier état et des pixels de cible dans un second état pour faciliter ensuite l'étape de superposition. Il est envisageable d'assigner un bit d'état à chaque pixel, à savoir un bit d'état à l'état « 0 » pour les pixels de fond et un bit d'état à l'état « 1 » pour les pixels de cible.

Selon une autre caractéristique de l'invention, l'étape de superposition consiste à :
- supprimer les pixels des images primaires qui correspondent aux pixels de fond des cartographies secondaires ; et
- intégrer les données de profondeur de champ aux pixels des images primaires qui correspondent aux pixels de cible des cartographies secondaires.

Ainsi, l'étape de superposition supprime sur les images primaires tous les pixels de couleur qui correspondent aux pixels de fond, et conserve sur ces mêmes images primaires tous les pixels de couleur qui correspondent aux pixels de cible tout en intégrant à ces derniers pixels de couleur les données de profondeur de champ qui permettent d'avoir une image avec les cibles en relief.

Selon une possibilité de l'invention, l'étape de détermination des cartographies secondaires en relief comprend en outre une étape de suppression des perturbations de profondeur. En effet, les données de profondeur de champ envoyées par le capteur infrarouge ne sont pas toujours stables, car un même point de la scène mesuré consécutivement ne possède pas exactement la même valeur de profondeur de champ ; cette variation de profondeur étant appelée dans la présente description « perturbation de profondeur ».

Cette étape de suppression des perturbations de profondeur met par exemple en oeuvre un algorithme de suppression de perturbation qui établit une moyenne de plusieurs valeurs de profondeur de champ consécutives, permettant ainsi d'obtenir une valeur mesurée stable de profondeur de champ.

Dans un mode de réalisation particulier de l'invention, l'étape d'acquisition d'images primaires est effectuée au moyen d'une caméra monochrome noir et blanc ou à nuances de gris.

Une caméra monochrome noir et blanc ou à nuances de gris présente l'avantage d'être sensible au rayonnement infrarouge, et permet en outre de réaliser de nombreux traitements d'image.

En variante, l'étape d'acquisition d'images primaires est effectuée au moyen d'une caméra couleur, pour récupérer toutes les informations de couleur pour l'enregistrement de la scène.

Un filtre infrarouge peut si nécessaire équipé la caméra couleur pour éliminer le rayonnement infrarouge. Cette caméra permet de réaliser tous les traitements d'image classiques, que ce soit sur la composante noir et blanc ou sur les composantes couleurs (rouge, vert et bleu, ou chrominance bleue et chrominance rouge).

Selon une autre possibilité de l'invention, l'étape d'acquisition d'images primaires est effectuée au moyen d'une caméra présentant une résolution supérieure à 1 méga pixels.

L'avantage d'une telle caméra, dite à haute résolution, est de permettre de mesurer plus précisément les cibles (objets et/ou personnes) présentes dans la scène.

De manière avantageuse, le procédé comprend en outre, après l'étape de comparaison des images secondaires, une étape de détermination de la taille et/ou position et/ou vitesse et/ou accélération de la ou des cibles présentes dans la scène.

Ainsi, la récupération ou mesure de tout ou partie de ces données (taille, vitesse, position, accélération) permet ensuite de déduire des comportements de personnes, des schémas de déplacement, des reconnaissances d'objets, etc.

Avantageusement, les étapes d'acquisition s'effectuent à des intervalles de temps réguliers espacés au maximum de 0,04 secondes, correspondant à un minimum de vingt cinq acquisitions par seconde.

En effet, l'optimisation de toute la chaine d'acquisition et de traitement permet de travailler en temps réel, c'est à dire avec un minimum de 25 images par seconde, ce qui permet de suivre les objets dans le temps, même avec un déplacement rapide.

Le procédé conforme à l'invention permet la mise en oeuvre pour au moins l'une des applications choisies dans la liste suivante :
- application de télésurveillance pour la détection, la surveillance et/ou la reconnaissance automatiques de personnes ou objets dans un espace de surveillance ;
- application médicale pour la détection et l'analyse automatiques de mouvements pratiqués par un patient effectuant des exercices articulaires et/ou musculaires ;
- application industrielle pour la détection et/ou la reconnaissance automatiques de pièces ou de défauts sur des pièces ;
- application de sécurité pour la détection de personnes s'approchant d'un périmètre de sécurité ;
- application de sécurité ou de contrôle pour le comptage de personnes et/ou d'objets ;
- application de sécurité ou de contrôle pour la détection de présence de personnes et/ou d'objets dans une zone définie.

Dans une réalisation avantageuse, l'étape d'émission d'un faisceau de lumière infrarouge consiste à projeter sur la scène un motif infrarouge monochromatique, et l'étape de traitement des données issues du capteur infrarouge consiste à analyser les déformations du motif projeté pour en définir la cartographie primaire.

En émettant un motif, le capteur infrarouge (notamment du type caméra infrarouge) détecte un motif déformé suite à la réflexion du motif par la scène, et ce motif déformé permet d'établir la cartographie primaire de profondeur de la scène. L'utilisation de ce motif donne les avantages suivants : insensibilité aux variations de luminosité, temps d'exposition très court (permettant ainsi de détecter des mouvements très rapides), fonctionnement possible en parallèle d'une source infra rouge externe (non monochromatique).

L'invention peut être mise en oeuvre avec un système d'acquisition et de traitement d'images pour la détection du mouvement d'au moins une cible dans une scène, comprenant :
- des moyens d'acquisition de cartographies primaires de profondeur de la scène à intervalles de temps successifs, comportant une source d'émission d'un faisceau de lumière infrarouge, un capteur infrarouge et un bloc de traitement des données issues du capteur infrarouge et de conversion de ces données en une cartographie primaire composée d'une multiplicité de pixels dits de profondeur intégrant chacun une donnée de profondeur de champ ;
- une caméra d'acquisition d'images primaires de la scène à intervalles de temps successifs, chaque image primaire étant composée d'une multiplicité de pixels dits de couleur intégrant chacun une donnée de couleur ;
ledit système étant remarquable en ce qu'il comporte en outre :
- des moyens de détermination de cartographies secondaires de profondeur par suppression d'un fond de référence de la scène sur chaque cartographie primaire selon un algorithme de soustraction de fond, chaque cartographie secondaire étant composée d'une multiplicité de pixels ;
- des moyens de synchronisation temporelle des cartographies secondaires et des images primaires ;
- des moyens de superposition des cartographies secondaires et des images primaires synchronisées pour obtenir des images secondaires comportant des pixels dits de cible intégrant des données de couleur et des données de profondeur de champ pour la ou les cibles présentes dans la scène hors du fond de référence ;
- des moyens de comparaison des images secondaires successives pour détecter le mouvement de la ou des cibles présentes dans la scène.

De manière avantageuse, la source d'émission est constituée d'une source d'émission d'un motif infrarouge monochromatique, avec les avantages déjà décrits ci-dessus.

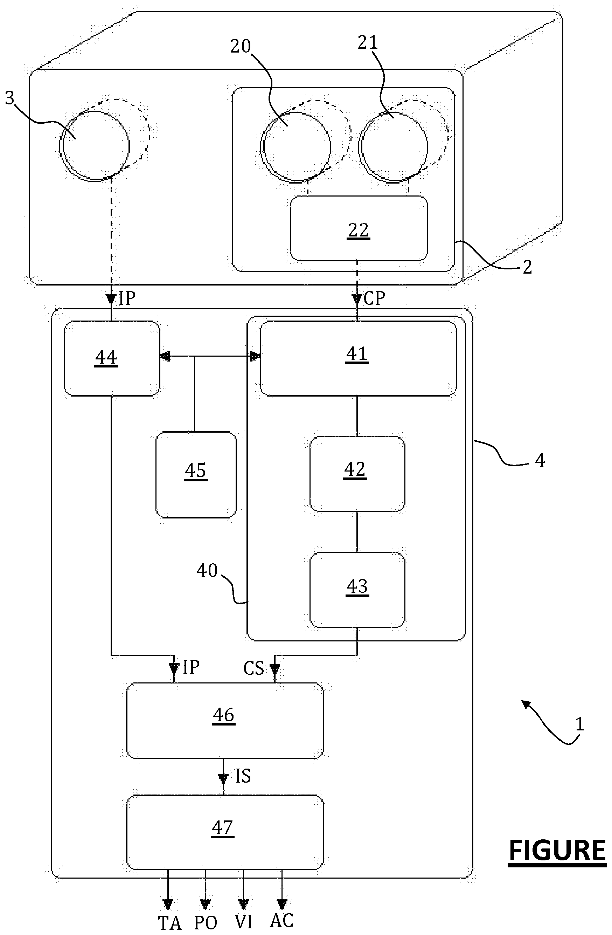

D'autres caractéristiques et avantages de la présente invention apparaîtront à la lecture de la description détaillée ci-après, d'un exemple de mise en oeuvre non limitatif, faite en référence à la figure unique annexée qui est une vue schématique d'un système conforme à l'invention.

En référence à la figure unique, un système 1 conforme à l'invention comporte un premier bloc optique 2 pour l'acquisition de cartographies primaires CP de profondeur de la scène à intervalles de temps successifs.

Ce premier bloc optique 2 comporte :
- une source d'émission 20 d'un faisceau de lumière infrarouge, ce faisceau de lumière étant établi selon un maillage ou une trame prédéfini, autrement appelé motif ;
- un capteur infrarouge 21 ; et
- un bloc de traitement 22 des données issues du capteur infrarouge 21 et de conversion de ces données en une cartographie primaire CP composée d'une multiplicité de pixels dits de profondeur intégrant chacun une donnée de profondeur de champ, ce bloc de traitement 22 étant éventuellement du type système sur puce (« SoC »).

Ce premier bloc optique 2 met en oeuvre la technologie décrite dans les demandes WO 2007/105205 A2, WO 2007/096893 A2, WO 2007/132451 A2, WO 2008/120217 A2, WO 2010/103482 A2, et WO 2011/013079 A1, pour l'obtention de cartographies de profondeur, et nous nous reporterons à ces demandes internationales pour de plus amples détails, en particulier sur le choix de la source d'émission 20 et du maillage employé, sur le choix du capteur infrarouge 21, et sur l'algorithme de traitement du signal mis en oeuvre par le bloc de traitement 22. En résumé, le capteur infrarouge 21 détecte un motif déformé suite à la réflexion du motif émis par la source d'émission 20 par la scène, et ce motif déformé permet d'établir la cartographie primaire CP.

En outre, les pixels de profondeur de la cartographie primaire CP sont calibrés par rapport à un repère unique, basé sur le sol de la scène. Cela permet de définir une distance entre chaque point ou pixel de la cartographie primaire CP en mouvement et le plan du sol (distance verticale). Cette transformée permet de mesurer la morphologie, la taille et la position des cibles présentes dans la scène. Le calibrage est réalisé automatiquement, par analyse de la scène, en détectant les zones planes de la scène (sol, mur...) pour en déduire le « décor fixe » de la scène. Des transformées matricielles sont ensuite utilisées pour convertir les points de profondeur en points tridimensionnel de la scène.

Le système 1 comporte en outre un second bloc optique 3 constitué d'une caméra pour l'acquisition d'images primaires IP de la scène à intervalles de temps successifs, chaque image primaire étant composée d'une multiplicité de pixels dits de couleur intégrant chacun une donnée de couleur.

Selon une première possibilité, la caméra 3 est constituée d'une caméra monochrome noir et blanc ou à nuances de gris. Cette caméra peut être réalisée selon une technologie CCD (« Charge-Coupled Device » ou dispositif à transfert de charge) ou CMOS (« Complementary metal oxide semi-conductor ») en fonction du besoin en sensibilité, étant noté que la technologie CCD présente une meilleure sensibilité dans l'obscurité.

Selon une seconde possibilité, la caméra 3 est constituée d'une caméra couleur, de préférence équipée d'un filtre infra rouge, et celle-ci peut éventuellement être réalisée selon une technologie CMOS, avec par exemple une résolution de 640x480, voire une résolution supérieure à 640x480.

Dans l'une ou l'autre des deux possibilités relatives au choix de la caméra, cette dernière peut être du type caméra à haute résolution, ou caméra HD (« High Définition »), avec une résolution supérieure à 1 méga pixels (1MPixels), et cette caméra peut être réalisée selon une technologie HD-IP (« Internet Protocol ») ou HD-SDI (« Serial Digital Interface »).

Le système 1 comporte également un bloc de traitement du signal 4 qui traite les données en provenance du premier bloc optique 2 et du second bloc optique 3, pour réaliser la détection du mouvement d'au moins une cible dans une scène située dans le champ de vision de ces deux blocs optiques 2, 3.

Ce bloc de traitement du signal 4 peut être réalisé sous la forme d'un ordinateur, notamment du type ordinateur durci ou ordinateur industriel, équipé d'un processeur intégrant un logiciel de traitement du signal pour la mise en oeuvre du procédé conforme à l'invention.

Ce bloc de traitement du signal 4 comporte un bloc de détermination 40 de cartographies secondaires CS de profondeur par suppression d'un fond de référence de la scène sur chaque cartographie primaire CP selon un algorithme de soustraction de fond, étant par ailleurs précisé que chaque cartographie secondaire CS est composée d'une multiplicité de pixels.

Ce bloc de détermination 40 comporte un bloc de réception 41 des cartographies primaires CP en provenance du premier bloc optique 2, suivi d'un bloc de suppression 42 des perturbations de profondeur et d'un fond de référence de la scène sur chaque cartographie primaire CP selon l'algorithme de soustraction de fond.

Les perturbations de profondeur correspondent aux variations dans les données de profondeur de champ pour un même point du fait d'une éventuelle instabilité dans la mesure des données de profondeur par le capteur infrarouge. Le bloc de suppression 42 des perturbations de profondeur établit une moyenne de plusieurs valeurs de profondeur de champ consécutives, permettant ainsi d'obtenir une valeur mesurée stable pour chaque donnée de profondeur de champ.

Le bloc de détermination 40 comporte enfin un bloc d'attribution 43 de l'un des deux états suivants à chacun des pixels des cartographies secondaires CS :
- un premier état, associé à un bit à l'état « 0 », pour les pixels dits de fond correspondants aux pixels supprimés sur les cartographies primaires CP par l'algorithme de soustraction de fond ; et
- un second état, associé à un bit à l'état « 1 », pour les pixels dits de cible correspondants aux pixels non supprimés sur les cartographies primaires CP par l'algorithme de soustraction de fond, lesdits pixels de cible intégrant les données correspondantes de profondeur de champ.

Ce bloc de traitement du signal 4 comporte également un bloc de réception 44 des images primaires IP en provenance du second bloc optique 3.

Le bloc de traitement du signal 4 comporte également un bloc de synchronisation temporelle 45 relié aux deux blocs de réception 41, 44 pour obtenir une synchronisation temporelle des cartographies secondaires CS et des images primaires IP.

Le bloc de traitement du signal 4 comporte, en sortie du bloc de détermination 40 et du bloc de réception 44, un bloc de superposition 46 des cartographies secondaires CS et des images primaires IP synchronisées pour obtenir des images secondaires IS comportant des pixels dits de cible intégrant à la fois des données de couleur et des données de profondeur de champ pour la ou les cibles présentes dans la scène hors du fond de référence.

Ce bloc de superposition 46 met en oeuvre les étapes suivantes :
- suppression des pixels des images primaires IP qui correspondent aux pixels de fond des cartographies secondaires CS ; et
- intégration des données de profondeur de champ aux pixels des images primaires IP qui correspondent aux pixels de cible des cartographies secondaires CS.

Le bloc de traitement du signal 4 comporte, en sortie du bloc de superposition 46, un bloc de comparaison 47 des images secondaires IS successives pour détecter le mouvement de la ou des cibles présentes dans la scène, en étudiant notamment :
- le déplacement latéral (c'est-à-dire dans le plan image), entre deux images secondaires IS successives, des pixels des images secondaires IS qui correspondent aux pixels de cible ;
- le déplacement en profondeur, entre deux images secondaires IS successives, des pixels des images secondaires IS qui correspondent aux pixels de cible, par comparaison des données de profondeur de champ.

Le bloc de comparaison 47 intègre également des moyens de calcul de l'un au moins paramètres suivants :
- taille TA ou dimensions de la ou des cibles présentes dans la scène ;
- position PO ou localisation dans l'espace de la ou des cibles présentes dans la scène ;
- vitesse VI de la ou des cibles présentes dans la scène ;
- accélération AC de la ou des cibles présentes dans la scène.

Le système 1 et le procédé associé selon l'invention peuvent trouver de nombreuses applications dont les suivantes :
- application de télésurveillance pour la détection, la surveillance et/ou la reconnaissance automatiques de personnes ou objets dans un espace de surveillance (par exemple détection d'intrusion, détection d'une personne inanimée, unicité de présence, stationnarité, contrôle d'accès, traçage d'objets mobiles, reconnaissance d'objets, comptage de personnes, etc.) ;
- application médicale pour la détection et l'analyse automatiques de mouvements pratiqués par un patient effectuant des exercices articulaires et/ou musculaires (par exemple analyse du mouvement de personnes pour la rééducation sans capteur collé sur la personne, analyse du mouvement pour les sportifs de haut niveau, aide aux personnes âgées, etc.) ;
- application industrielle pour la détection et/ou la reconnaissance automatiques de pièces ou de défauts sur des pièces (par exemple contrôle de pièces sans les toucher, détection de trous ou défauts sur des pièces, mesure de distance, contrôle de qualité,etc.) ;
- application de sécurité pour la détection de personnes s'approchant d'un périmètre de sécurité (par exemple sécurité des personnes travaillant à proximité d'une machine industrielle dangereuse, etc.).

Bien entendu l'exemple de mise en oeuvre évoqué ci-dessus ne présente aucun caractère limitatif et d'autres améliorations et détails peuvent être apportés au système selon l'invention, sans pour autant sortir du cadre de l'invention où d'autres moyens de traitement du signal peuvent être mis en oeuvre.

## Revendications

1. Procédé d'acquisition et de traitement d'images pour la détection du mouvement d'au moins une cible dans une scène, comprenant les étapes suivantes :
- acquisition de cartographies primaires (CP) de profondeur de la scène à intervalles de temps successifs par la mise en oeuvre des sous-étapes suivantes à chaque intervalle de temps : émission d'un faisceau de lumière infrarouge qui illumine la scène, détection par un capteur infrarouge (21) de la lumière infrarouge réfléchie par la scène, traitement des données issues du capteur infrarouge (21) et conversion de ces données en une cartographie primaire (CP) composée d'une multiplicité de pixels dits de profondeur intégrant chacun une donnée de profondeur de champ ;
- acquisition d'images primaires (IP) de la scène à intervalles de temps successifs au moyen d'une caméra (3), chaque image primaire (IP) étant composée d'une multiplicité de pixels dits de couleur intégrant chacun une donnée de couleur ;
- détermination de cartographies secondaires (CS) de profondeur par suppression d'un fond de référence de la scène sur chaque cartographie primaire (CP) selon un algorithme de soustraction de fond, chaque cartographie secondaire (CS) étant composée d'une multiplicité de pixels ;
- synchronisation temporelle des cartographies secondaires (CS) et des images primaires (IP) ;
ledit procédé étant **caractérisé en ce qu'**il comporte les étapes supplémentaires suivantes :
- superposition des cartographies secondaires (CS) et des images primaires (IP) synchronisées pour obtenir des images secondaires (IS) comportant des pixels dits de cible intégrant des données de couleur et des données de profondeur de champ pour la ou les cibles présentes dans la scène hors du fond de référence ;
- comparaison des images secondaires (IS) successives pour détecter le mouvement de la ou des cibles présentes dans la scène ;
**en ce que** l'étape de détermination des cartographies secondaires (CS) comporte une sous-étape d'attribution de l'un des deux états suivants à chacun des pixels :
- un premier état pour les pixels dits de fond correspondants aux pixels supprimés sur les cartographies primaires (CP) par l'algorithme de soustraction de fond ; et
- un second état pour les pixels dits de cible correspondants aux pixels non supprimés sur les cartographies primaires (CP) par l'algorithme de soustraction de fond, lesdits pixels de cible intégrant les données correspondantes de profondeur de champ ;
et **en ce que** l'étape de superposition consiste à :
- supprimer les pixels des images primaires (IP) qui correspondent aux pixels de fond des cartographies secondaires (CS) ; et
- intégrer les données de profondeur de champ aux pixels des images primaires (IP) qui correspondent aux pixels de cible des cartographies secondaires (CS).

2. Procédé selon la revendication 1, dans lequel l'étape de détermination des cartographies secondaires (CS) en relief comprend en outre une étape de suppression des perturbations de profondeur.

3. Procédé selon les revendications 1 ou 2, dans lequel l'étape d'acquisition d'images primaires (IP) est effectuée au moyen d'une caméra (3) monochrome noir et blanc ou à nuances de gris.

4. Procédé selon les revendications 1 ou 2, dans lequel l'étape d'acquisition d'images primaires (IP) est effectuée au moyen d'une caméra (3) couleur.

5. Procédé selon l'une quelconque des revendications précédentes, dans lequel l'étape d'acquisition d'images primaires (IP) est effectuée au moyen d'une caméra (3) présentant une résolution supérieure à 1 méga pixels.

6. Procédé selon l'une quelconque des revendications précédentes, comprenant en outre, après l'étape de comparaison des images secondaires (IS), une étape de détermination de la taille (TA) et/ou position (PO) et/ou vitesse (VI) et/ou accélération (AC) de la ou des cibles présentes dans la scène.

7. Procédé selon l'une quelconque des revendications précédentes, dans lequel les étapes d'acquisition s'effectuent à des intervalles de temps réguliers espacés au maximum de 0,04 secondes, correspondant à un minimum de vingt cinq acquisitions par seconde.

8. Procédé selon l'une quelconque des revendications précédentes, dans lequel ledit procédé est mis en oeuvre pour au moins l'une des applications choisies dans la liste suivante :
- application de télésurveillance pour la détection, la surveillance et/ou la reconnaissance automatiques de personnes ou objets dans un espace de surveillance ;
- application médicale pour la détection et l'analyse automatiques de mouvements pratiqués par un patient effectuant des exercices articulaires et/ou musculaires ;
- application industrielle pour la détection et/ou la reconnaissance automatiques de pièces ou de défauts sur des pièces ;
- application de sécurité pour la détection de personnes s'approchant d'un périmètre de sécurité ;
- application de sécurité ou de contrôle pour le comptage de personnes et/ou d'objets ;
- application de sécurité ou de contrôle pour la détection de présence de personnes et/ou d'objets dans une zone définie.

9. Procédé selon l'une quelconque des revendications précédentes, dans lequel l'étape d'émission d'un faisceau de lumière infrarouge consiste à projeter sur la scène un motif infrarouge monochromatique, et l'étape de traitement des données issues du capteur infrarouge (21) consiste à analyser les déformations du motif projeté pour en définir la cartographie primaire (CP).

## Patentansprüche

1. Verfahren zur Erfassung und Verarbeitung von Bildern zur Bewegungsdetektion von mindestens einem Zielobjekt in einer Szene, das die folgenden Schritte umfasst:
- Erfassung von primären Kartierungen (CP) der Tiefe der Szene in aufeinanderfolgenden Zeitintervallen durch die Durchführung der folgenden Unterschritte in jedem Zeitintervall: Aussenden eines Infrarotlichtstrahls, der die Szene beleuchtet, Erfassung des von der Szene reflektierten Infrarotlichts durch einen Infrarotsensor (21), Verarbeitung der vom Infrarotsensor (21) ausgegebenen Daten und Umwandlung dieser Daten in eine primäre Kartierung (CP), die aus einer Vielzahl von sogenannten Tiefenbildpunkten besteht, die jeweils eine Dateneinheit zu der Schärfentiefe integrieren;
- Erfassung von primären Bildern (IP) der Szene in aufeinanderfolgenden Zeitintervallen mittels einer Kamera (3), wobei jedes primäre Bild (IP) aus einer Vielzahl von sogenannten Farbbildpunkten zusammengesetzt ist, die jeweils eine Dateneinheit zu der Farbe integrieren;
- Bestimmung von sekundären Kartierungen (CS) der Tiefe durch Entfernen eines Referenzhintergrunds der Szene auf jeder primärer Kartierung (CP) gemäß einem Subtraktionsalgorithmus für den Hintergrund, wobei jede sekundäre Kartierung (CS) aus einer Vielzahl von Bildpunkten (Pixeln) besteht;
- zeitliche Synchronisierung der sekundären Kartierungen (CS) und der primären Bilder (IP);
wobei das Verfahren **dadurch gekennzeichnet ist, dass** es die folgenden zusätzlichen Schritte umfasst:
- Überlagerung der sekundären Kartierungen (CS) und der synchronisierten primären Bilder (IP), um sekundäre Bilder (IS) mit sogenannten Zielbildpunkten zu erhalten, die Daten zu der Farbe und Tiefenschärfe für das oder die Zielobjekte integrieren, die in der Szene außerhalb des Referenzhintergrunds vorhanden sind;
- Vergleich der aufeinanderfolgenden sekundären Bilder (IS), um die Bewegung des oder der in der Szene vorhandenen Zielobjekte zu erkennen;
dadurch, dass der Schritt der Bestimmung der sekundären Kartierungen (CS) einen Unterschritt der Zuweisung eines der beiden folgenden Zustände zu jedem der Bildpunkte umfasst:
- einen ersten Zustand für die sogenannten Hintergrundbildpunkte, die den Bildpunkten entsprechen, die auf den primären Kartierungen (CP) durch den Subtraktionsalgorithmus für den Hintergrund entfernt wurden; und
- einen zweiten Zustand für die sogenannten Zielobjektbildpunkte, die den Bildpunkten entsprechen, die auf den primären Kartierungen (CP) durch den Subtraktionsalgorithmus für den Hintergrund nicht entfernt wurden, wobei die Zielobjektbildpunkte die entsprechenden Daten zu der Schärfentiefe integrieren;
und dadurch, dass der Schritt der Überlagerung Folgendes vorsieht:
- die Bildpunkte der primären Bilder (IP) löschen, die den Hintergrundbildpunkten der sekundären Kartierungen (CS) entsprechen; und
- die Daten zu der Tiefenschärfe in die Bildpunkte der primären Bilder (IP) integrieren, die den Bildpunkten des Zielobjekts der sekundären Kartierungen (CS) entsprechen.

2. Verfahren nach Anspruch 1, wobei der Schritt des Bestimmens der sekundären Reliefkartierungen (CS) zusätzlich einen Schritt des Entfernens von Störungen der Tiefe umfasst.

3. Verfahren nach Anspruch 1 oder 2, wobei der Schritt des Erfassens von primären Bildern (IP) mithilfe einer monochromen Schwarz-Weiß- oder Graustufenkamera (3) durchgeführt wird.

4. Verfahren nach Anspruch 1 oder 2, wobei der Schritt des Erfassens von primären Bildern (IP) mithilfe einer Farbkamera (3) durchgeführt wird.

5. Verfahren nach einem der vorhergehenden Ansprüche, wobei der Schritt zur Erfassung von primären Bildern (IP) mithilfe einer Kamera (3) mit einer Auflösung von mehr als 1 Megapixel durchgeführt wird.

6. Verfahren nach einem der vorhergehenden Ansprüche, das ferner nach dem Schritt des Vergleichs von sekundären Bildern (IS) einen Schritt der Bestimmung der Größe (TA) und/oder Position (PO) und/oder Geschwindigkeit (VI) und/oder Beschleunigung (AC) des oder der in der Szene vorhandenen Zielobjekte umfasst.

7. Verfahren nach einem der vorhergehenden Ansprüche, wobei die Schritte der Erfassung in regelmäßigen Zeitintervallen erfolgen, die höchstens 0,04 Sekunden auseinander liegen, was einem Minimum von fünfundzwanzig Erfassungen pro Sekunde entspricht.

8. Verfahren nach einem der vorhergehenden Ansprüche, wobei es für mindestens eine der aus der folgenden Liste ausgewählten Anwendungen durchgeführt wird:
- Anwendung der Fernüberwachung zur automatischen Erfassung, Überwachung und/oder Erkennung von Personen oder Objekten in einem überwachten Bereich;
- medizinische Anwendung zur automatischen Erfassung und Analyse von Bewegungen, die ein Patient bei der Durchführung von Gelenk- und/oder Muskelübungen ausführt;
- industrielle Anwendung zur automatischen Erfassung und/oder Erkennung von Teilen oder Fehlern an Teilen;
- sicherheitsorientierte Anwendung zur Erfassung von Personen, die sich einem Sicherheitsbereich nähern;
- sicherheitsorientierte oder kontrollierende Anwendung zum Zählen von Personen und/oder Objekten;
- sicherheitsorientierte oder kontrollierende Anwendung zur Erfassung der Anwesenheit von Personen und/oder Objekten in einem bestimmten Bereich.

9. Verfahren nach einem der vorhergehenden Ansprüche, bei dem der Schritt des Aussendens eines Infrarotlichtstrahls darin besteht, ein monochromatisches Infrarotmuster auf die Szene zu projizieren, und der Schritt der Verarbeitung der vom Infrarotsensor (21) stammenden Daten darin besteht, die Verformungen des projizierten Musters zu analysieren, um daraus die primäre Kartierung (CP) zu bestimmen.

## Claims

1. A method for acquiring and processing images for detecting the movement of at least one target in a scene, comprising the following steps of:
- acquiring primary depth maps (CP) of the scene at successive time intervals by implementing the following sub-steps at each time interval: emission of an infrared light beam which illuminates the scene, detection by an infrared sensor (21) of the infrared light reflected by the scene, processing of the data coming from the infrared sensor (21) and conversion of these data into a primary map (CP) composed of a multiplicity of so-called depth pixels each integrating a field depth datum:
- acquiring primary images (IP) of the scene at successive time intervals by means of a camera (3), each primary image (IP) being composed of a multiplicity of so-called color pixels each integrating a color datum;
- determining secondary depth maps (CS) by deleting a reference background from the scene on each primary map (CP) according to a background subtraction algorithm, each secondary map (CS) being composed of a multiplicity of pixels;
- temporally synchronizing secondary maps (CS) and primary images (IP);
said method being **characterized in that** it includes the following additional steps of:
- superposing synchronized secondary maps (CS) and primary images (IP) to obtain secondary images (IS) including so-called target pixels integrating color data and field depth data for the target(s) present in the scene outside the reference background;
- comparing successive secondary images (IS) to detect the movement of the target(s) present in the scene;
**in that** the step of determining the secondary maps (CS) includes a sub-step of assigning one of the following two states to each of the pixels:
- a first state for the so-called background pixels corresponding to the pixels deleted on the primary maps (CP) by the background subtraction algorithm; and
- a second state for the so-called target pixels corresponding to the pixels not deleted on the primary maps (CP) by the background subtraction algorithm, said target pixels integrating the corresponding field depth data;
and **in that** the superposition step consists in:
- deleting the pixels of the primary images (IP) which correspond to the background pixels of the secondary maps (CS); and
- integrating the field depth data to the pixels of the primary images (IP) which correspond to the target pixels of the secondary maps (CS).

2. The method according to claim 1, wherein the step of determining the secondary relief maps (CS) further comprises a step of deleting the disturbances of depth.

3. The method according to claims 1 or 2, wherein the step of acquiring primary images (IP) is carried out by means of a monochrome black and white or grayscale camera (3).

4. The method according to claims 1 or 2, wherein the step of acquiring primary images (IP) is carried out by means of a color camera (3).

5. The method according to any one of the preceding claims, wherein the step of acquiring primary images (IP) is carried out by means of a camera (3) having a resolution greater than 1 megapixel.

6. The method according to any one of the preceding claims, further comprising, after the step of comparing the secondary images (IS), a step of determining the size (TA) and/or position (PO) and/or speed (VI) and/or acceleration (AC) of the target(s) present in the scene.

7. The method according to any one of the preceding claims, wherein the acquisition steps are carried out at regular time intervals spaced at a maximum of 0.04 seconds, corresponding to a minimum of twenty-five acquisitions per second.

8. The method according to any one of the preceding claims, wherein said method is implemented for at least one of the applications selected from the following list:
- remote monitoring application for the automatic detection, monitoring and/or recognition of people or objects in a monitoring space;
- medical application for the automatic detection and analysis of movements practiced by a patient performing articular and/or muscular exercises;
- industrial application for the automatic detection and/or recognition of parts or defects on parts;
- security application for the detection of people approaching a security perimeter;
- security or control application for counting people and/or objects;
- security or control application for detecting the presence of people and/or objects in a defined area.

9. The method according to any one of the preceding claims, wherein the step of emitting an infrared light beam consists in projecting a monochromatic infrared pattern onto the scene, and the step of processing the data coming from the infrared sensor (21) consists in analyzing the deformations of the projected pattern to define its primary map (CP).
